# EUROPEAN PATENT APPLICATION

(11) **EP 3 051 160 A1**
(43) Date of publication of application: **03.08.2016**
(21) Application number: 14848372.0
(22) Date of filing: 24.09.2014
(51) Int. Cl.: F16C 33/38, F16C 19/06, F16C 33/44

(54) **DEEP GROOVE BALL BEARING**

(30) Priority: 26.09.2013 JP 2013199261
(71) Applicant: NTN Corporation, Osaka-shi, Osaka 550-0003 (JP)
(72) Inventor: WAKUDA, Takahiro, Iwata-shi Shizuoka 438-0037 (JP)
(74) Representative: Grünecker Patent- und Rechtsanwälte PartG mbB
(86) International application number: PCT/JP2014/075215
(87) International publication number: WO 2015/046213

(57) **Abstract**

A deep groove ball bearing is provided which can prevent an excessive amount of lubricating oil from flowing out of the bearing, thereby minimizing shortening of the life of the bearing due to insufficient lubrication. Balls (30) are disposed between the raceway groove (11) of the outer race (10) and the raceway groove (21) of the inner race (20), and retained by a first split retainer (41) and a second split retainer (42) inserted in the first split retainer (41). While the first and second split retainers (41) and (42) are rotating, a pump effect is generated due to a difference in peripheral speed between the retainers resulting from the difference in diameter between the retainers. By the pump effect, lubricating oil is pulled into the bearing, and flows out of the bearing from the other axial side of the first split retainer (41). The first split retainer (41) includes a flange (60) at the other axial side thereof to prevent an excessive amount of lubricating oil from flowing out of the bearing.

## Description

### TECHNICAL FIELD

The present invention relates to a deep groove ball bearing including balls disposed between its outer race and inner race.

### BACKGROUND ART

In a transmission of the type including a plurality of gear type speed reducing portions having different reduction ratios and disposed between an input shaft and an output shaft arranged coaxial with each other and a countershaft extending parallel to the input and output shafts, and capable of reducing the rotational speed of the input shaft in a stepwise manner and transmitting the thus reduced rotation to the output shaft, since helical gears are ordinarily used in the gear type speed reducing portions, thrust forces are applied to the input shaft, the output shaft and the countershaft while torque is being transmitted from the input shaft to the output shaft.

It is therefore necessary to use bearings capable of supporting both radial loads and thrust loads, to support the input shaft, the output shaft and the countershaft.

Since tapered roller bearings are large in load capacity and capable of supporting both radial loads and thrust loads, tapered roller bearings are suitable for use in transmissions. However, since tapered roller bearings tend to increase fuel consumption of the vehicle due to large torque loss, deep groove ball bearings, of which the torque loss is small, are now used in an increasingly large number of transmissions.

Deep groove ball bearings include balls disposed between the inner and outer races and retained by a retainer. Some of such retainers are made of metal, while others are made of synthetic resin.

The retainers used in conventional deep groove ball bearings are all capable of merely retaining the balls, so that deep groove ball bearings are inferior in oil circulating ability (lubricating ability) to tapered roller bearings. Deep groove ball bearings are therefore more likely to heat up under high-load and high-speed operating conditions such as when used in transmissions, so that deep groove ball bearings are less durable.

In order to solve this problem, the applicant of the present invention proposed, in the below-identified Patent document 1, a deep groove ball bearing including a retainer constituted by two retainer portions made of synthetic resin and having different outer diameters. The smaller-diameter retainer portion is fitted in the larger-diameter portion such that the retainer forms two cylindrical surfaces having different diameters on the outer periphery thereof. With this arrangement, due to the difference in peripheral speed between the two cylindrical surfaces resulting from the difference in diameter therebetween, the pump effect is generated which forcibly pulls lubricating oil into the bearing, thus more efficiently lubricating the interior of the bearing.

### PRIOR ART DOCUMENT(S)

### PATENT DOCUMENT(S)

Patent document 1: JP Patent Publication 2011-21661A

### SUMMARY OF THE INVENTION

### OBJECT OF THE INVENTION

With the deep groove ball bearing disclosed in Patent document 1, since lubricating oil in the bearing is forcibly moved by the pump effect generated while the bearing is rotating, lubricating oil may excessively flow out of the bearing, causing insufficient lubrication.

An object of the present invention is to provide a deep groove ball bearing which can prevent an excessive amount of lubricating oil from flowing out of the bearing, thereby minimizing shortening of the life of the bearing due to insufficient lubrication.

In order to achieve this object, the present invention provides a deep groove ball bearing comprising an outer race formed with a raceway groove on a radially inner surface of the outer race, an inner race formed with a raceway groove on a radially outer surface of the inner race, balls disposed between the raceway groove of the outer race and the raceway groove of the inner race, and a retainer retaining the balls, wherein the retainer comprises a first cylindrical split retainer member, and a second cylindrical split retainer member inserted inside of the first split retainer member, wherein the first split retainer member includes a first axial portion having a first axial side surface formed with first cutouts circumferentially spaced apart from each other, and the second split retainer member includes a second axial portion having a second axial side surface axially opposed to the first axial side surface and formed with second cutouts circumferentially spaced apart from each other, wherein the second axial portion is fitted in the first axial portion such that each of the first cutouts and a corresponding one of the second cutouts define a circular pocket in which is retained each of the balls, wherein the first split retainer member includes a second axial portion opposite from the first axial side surface of the first split retainer member and protruding axially from the second axial side surface of the second split retainer member, wherein the second split retainer member includes a first axial portion opposite from the second axial side surface of the second split retainer member and protruding axially from the first axial side surface of the first split retainer member, wherein the deep groove ball bearing further comprises a coupling means axially inseparably coupling together the first and second split retainer members, and wherein a flange is provided at a second axial side of the first split retainer member opposite from the first axial side surface of the first split retainer member.

With this deep groove ball bearing, when the outer race and the inner race rotate relative to each other, the balls revolve around the axis of the bearing while rotating about their respective centers, so that the retainer, which is constituted by the first split retainer member and the second split retainer member, rotates.

The outer periphery of the retainer is constituted by the radially outer surface of the first split retainer member and the radially outer surface of the second split retainer member. Since the two radially outer surfaces have different diameters from each other, the pump effect is generated in the bearing due to the difference in peripheral speed between the two radially outer surface resulting from the difference in diameter therebetween, whereby lubricating oil is pulled into the bearing, flows in the bearing, and flows out of the bearing from the second axial side of the first split retainer member.

At this time, the flange provided at the second axial side of the first split retainer member interfere with lubricating oil flowing out of the bearing, thus preventing an excessive amount of lubricating oil from flowing out of the bearing.

For reduced weight and cost of the deep groove ball bearing, the first split retainer member and the second split retainer member of the ball bearing are preferably made of synthetic resin.

Since the deep groove ball bearing is lubricated by lubricating oil, the first split retainer member and the second split retainer member are especially preferably made of oil-resistant synthetic resin. Such oil-resistant synthetic resins include polyamide 46 (PA46), polyamide 66 (PA66), polyamide 9T (PA9T), poly(ether ether ketone) resin (PEEK), and polyphenyl sulfide resin (PPS).

### ADVANTAGES OF THE INVENTION

According to the present invention, the flange provided at the second axial side of the first split retainer member prevents an excessive amount of lubricating oil pulled into the bearing due to the pump effect generated while the retainer is rotating, from flowing out of the bearing. This prevents shortening of the life of the bearing due to shortage of lubricating oil in the bearing.

### BRIEF DESCRIPTION OF THE DRAWINGS

Fig. 1 is a vertical sectional view of a deep groove ball bearing according to the present invention.
Fig. 2 is a partially cutaway right-hand side view of a portion of a retainer shown in Fig. 1.
Fig. 3 is a left-hand side view of a portion of the retainer shown in Fig. 1.
Fig. 4 is an enlarged sectional view of a first split retainer member and a second split retainer member shown in Fig. 1, showing the connecting portion therebetween.
Fig. 5 is a plan view of portions of the first split retainer members and the second split retainer member.
Fig. 6(I) is a plan view of the first split retainer member shown in Fig. 5, showing circumferential pocket gap between a pocket of the first split retainer member and a ball received in the pocket; and Fig. 6(II) is a plan view of the first split retainer member shown in Fig. 5, showing an axial pocket gap between a pocket of the first split retainer member and a ball received in the pocket.
Fig. 7 is a plan view of a portion of a different retainer.
Fig. 8 is a plan view of a first split retainer member shown in Fig. 7, showing a circumferential pocket gap between a pocket of the first split retainer member and a ball received in the pocket.

### MODE FOR EMBODYING THE INVENTION

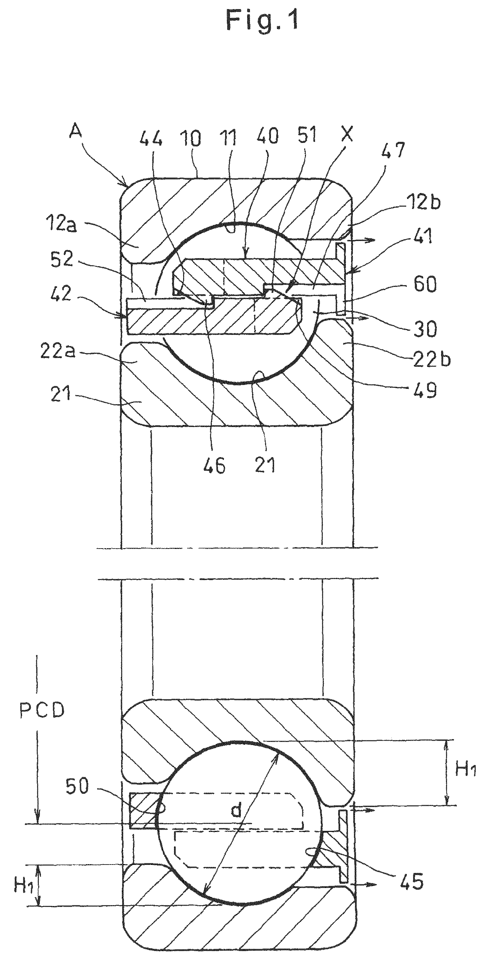

The embodiment of the present invention is now described with reference to the drawings. As shown in Fig. 1, the deep groove ball bearing A of the embodiment includes balls 30 disposed between a raceway groove 11 formed in the radially inner surface of an outer race 10 and a raceway groove 21 formed in the radially outer surface of the inner race 20, and retained by a retainer 40.

The outer race 10 has a pair of shoulders 12a and 12b which are formed, respectively, on one and the other sides of the raceway groove 11, of which the shoulder 12a is higher than the corresponding shoulder of the outer race of a standard deep groove ball bearing, and the shoulder 12b is of the same height as the corresponding shoulder of the outer race of a standard deep groove ball bearing. The inner race 20 has a pair of shoulders 22a and 22b which are formed, respectively, on the one and the other sides of the raceway groove 11, of which the shoulder 22b is higher than the corresponding shoulder of the inner race of a standard deep groove ball bearing, and the shoulder 22a is of the same height as the corresponding shoulder of the inner race of a standard deep groove ball bearing. However, the outer race 10 and the inner race 20 may be of the same structure as the outer race and the inner race of a standard deep groove ball bearing. Also, the shoulder 12b, located on the other side of the outer race 10, and the shoulder 22a, located on the one side of the inner race 20, may be lower in height than the corresponding shoulders of a standard deep groove ball bearing. A standard deep groove ball bearing refers to a bearing of which the pair of shoulders of the outer race and the pair of shoulders of the inner race are all of the same height.

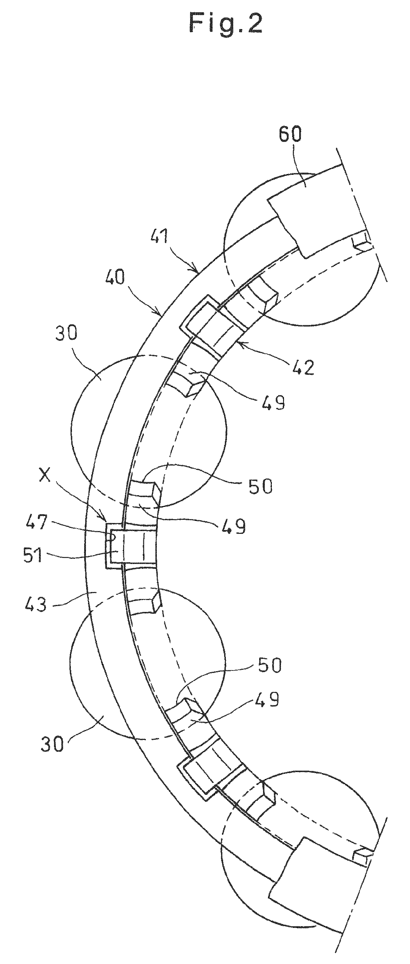

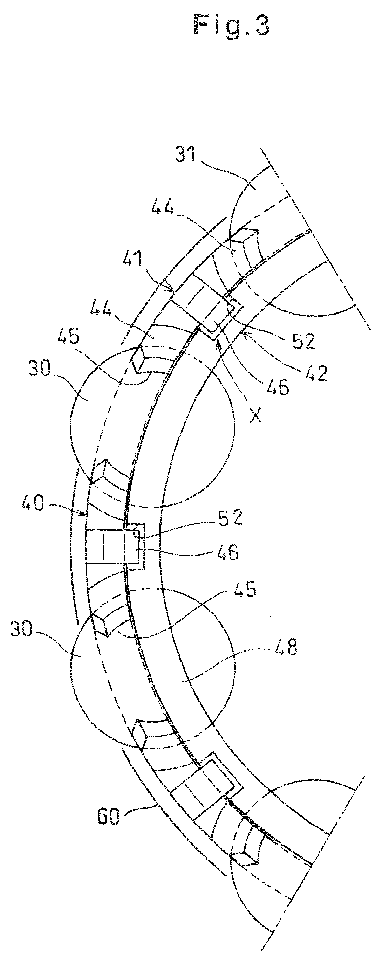

As shown in Figs. 1 to 3, the retainer 40 comprises a first split retainer member 41, and a second split retainer member 42 inserted in the first split retainer member 41.

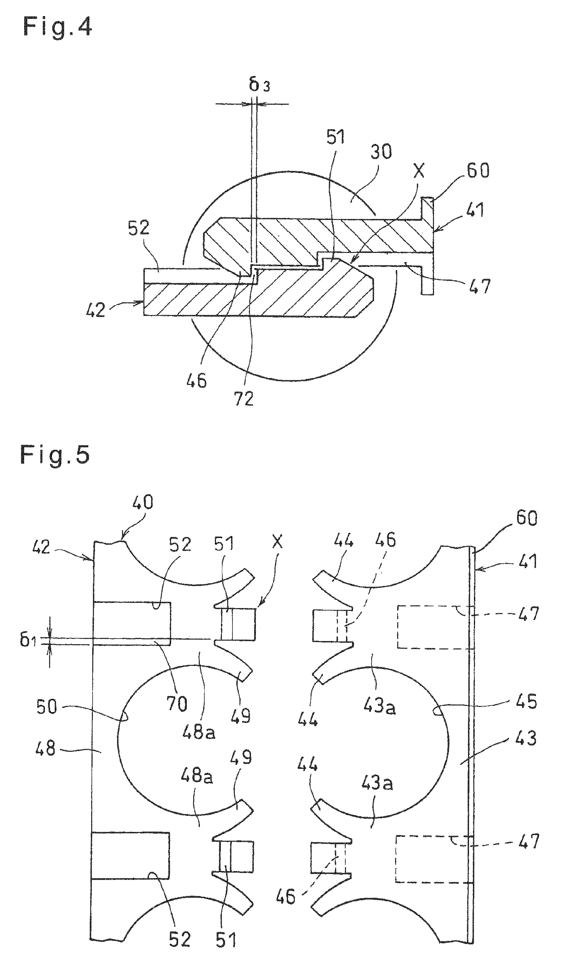

As shown in Fig. 5, the first split retainer member 41 comprises an annular member 43 made of a synthetic resin and formed on a first axial side surface thereof with opposed pairs of pocket claws 44 that are circumferentially equidistantly spaced apart from each other. The annular member 43 is further formed with first cutouts 45 each between one opposed pair of pocket claws 44 and having, in plan view, the shape of a partial circle larger than a semicircle. The annular member 43 further includes a flange 60 provided on the second axial side thereof opposite from the first axial side surface thereof to extend radially inwardly and radially outwardly.

As shown in Fig. 1, the annular member 43 has an inner diameter substantially equal to the pitch circle diameter (PCD) of the balls 30, and has an outer diameter within the range between the inner dimeter of the shoulder 12a, i.e. the higher of the two shoulders 12a and 12b, of the outer race 10, and the inner diameter of the lower shoulder 12b of the outer race 10, whereby the first split retainer member 41 can be inserted into the bearing from its side where there is the lower shoulder 12b. The cutouts 45 have spherical inner surfaces extending along the outer peripheries of the respective balls 30.

The second split retainer member 42 comprises an annular member 48 made of a synthetic resin and formed, on a second axial side surface thereof which is opposed to the first axial side surface of the annular member 43, with opposed pairs of pocket claws 49 that are circumferentially equidistantly spaced apart from each other. The annular member 48 is further formed with second cutouts 50 each between one opposed pair of pocket claws 49 and having, in plan view, the shape of a partial circle larger than a semicircle.

As shown in Fig. 1, the annular member 48 has an outer diameter substantially equal to the pitch circle diameter (PCD) of the balls 30, and has an inner diameter within the range between the inner dimeter of the shoulder 22b, i.e. the higher of the two shoulders 22a and 22b, of the inner race 20, and the inner diameter of the lower shoulder 22a of the inner race 20, whereby the second split retainer member 42 can be inserted into the bearing from its side where there is the lower shoulder 22a, and fitted into the first split retainer member 41. The cutouts 50 have spherical inner surfaces extending along the outer peripheries of the respective balls 30.

As shown in Figs. 4 and 5, between the first split retainer member 41 and the second split retainer member 42, there are provided coupling means X which axially inseparably hold together the first split retainer member 41 and the second split retainer member 42 when a second axial portion of the second split retainer member 42 which includes the above-mentioned second axial side surface is inserted into a first axial portion of the first split retainer member 41 which includes the above-mentioned first axial side surface until a circular pocket is defined by each opposed pair of cutouts 45 and 50.

Each of the coupling means X includes an inwardly extending engaging claw 46 formed on the distal end of a crossbar 43a defined between an adjacent pair of the cutouts 45 of the first split retainer member 41, a groove-shaped engaging recess 47 formed in the radially inner surface of the annular member 43 so as to be axially aligned with the engaging claw 46, an outwardly extending engaging claw 51 formed on the distal end of a crossbar 48a defined between the adjacent pair of the cutouts 50 corresponding to the adjacent pair of the cutouts 45, and an engaging recess 52 formed in the radially outer surface of the annular member 48 so as to be axially aligned with the engaging claw 51. By engaging the engaging claws 46 of the first split retainer member 41 into the respective engaging recesses 52 of the second split retainer member 42, and engaging the engaging claws 51 of the second split retainer member 42 into the respective engaging recesses 47 of the first split retainer member 41, the first split retainer member 41 and the second split retainer member 42 are axially inseparably held together.

Since the first split retainer member 41 and the second split retainer member 42 are brought into contact with lubricating oil for lubricating the deep groove ball bearing, they are made of an oil-resistant synthetic resin. Such synthetic resins include polyamide 46 (PA46), polyamide 66 (PA66), polyamide 9T (PA9T), poly(ether ether ketone) (PEEK), and polyphenylene sulfide (PPS). A suitable one of them should be selected according to the type of the lubricating oil used.

In assembling the deep groove ball bearing of the embodiment, the inner race 20 is inserted into the outer race 10 and a required number of the balls 30 are mounted in position between the raceway groove 21 of the inner race 20 and the raceway groove 11 of the outer race 10.

In order to mount the balls 30 in position, the inner race 20 is radially moved relative to the outer race 10 until the radially outer surface of the inner race 20 is partially brought into abutment with the radially inner surface of the outer race 10, and a crescent moon-shaped gap is defined between the inner and outer races 20 and 10 at a position diametrically opposite from the portion where the inner and outer races 20 and 10 are in abutment with each other, and then the balls 30 are fitted into the bearing through one side of the crescent moon-shaped gap.

When fitting the balls 30, if the shoulder 12a of the outer race 10, to which a thrust force is applied, or the higher of the shoulders of the inner race 20, i.e. the shoulder 22b is higher in height H₁ than necessary, the shoulder 12a or 22b may interfere with the balls 30 when fitting the balls 30. Thus, in the embodiment, the ratio of either of the heights H₁ to the diameter of each ball 30, i.e. the ratio H₁/d is determined at less than 0.50 so that the balls 30 can be reliably fitted into the bearing. In order to prevent a ball 30 from landing onto the shoulder 12a or 22b, the ratio of either of the heights H₁ to the diameter of each ball 30, namely, the ratio H₁/d is determined at 0.25 or over.

After fitting the balls 30, with the inner and outer races 20 and 10 positioned such that their center axes coincide with each other, and with the balls 30 arranged so as to be circumferentially equidistantly spaced from each other, the first split retainer member 41 is inserted between the inner and outer races 20 and 10 from the side where there is the lower shoulder 12b of the outer race 10, until the balls 30 are fitted into the respective cutouts 45 of the first split retainer member 41.

Next, the second split retainer member 42 is inserted between the inner and outer races 20 and 10 from the side where there is the lower shoulder 22a of the inner race 20, until the above-mentioned second axial portion of the second split retainer member 42 is fitted into the first axial portion of the first split retainer member 41, with the balls 30 fitted into the respective cutouts 50 of the second split retainer member 42.

By fitting the second split retainer member 42 into the first split retainer member 41, the deep groove ball bearing is assembled, with the engaging claws 46 and 51 of the split retainer members 41 and 42 engaged in the engaging recesses 52 and 47 of the split retainer members 42 and 41, respectively, as shown in Figs. 1 and 4.

After fitting the balls 30 between the raceway groove 11 of the outer race 10 and the raceway groove 21 of the inner race 20, by, as described above, simply inserting the first and second split retainer members 41 and 42 between the outer race 10 and the inner race 20 from the respective sides until the second split retainer 42 is fitted into the first split retainer member 41, the deep groove ball bearing A is assembled.

If, for example, this deep groove ball bearing A is used to support a torque transmission shaft, such as the input shaft of a transmission, when the torque transmission shaft rotates, and the inner and outer races 20 and 10 rotate relative to each other, the balls 30 are rotated about their own axes, while revolving around the axis of the bearing. Due to the revolution of the balls 30, the retainer 40 is rotated, so that if lubricating oil is present between the inner and outer races 20 and 10, the lubricating oil is rotated due to contact with the retainer 40.

Since the first split retainer member 41 and the second split retainer member 42 have different outer diameters, the lubricating oil portion that is being rotated due to contact with the first split retainer member 41 flows faster than the lubricating oil portion being rotated due to contact with the second split retainer member 42. This causes the lubricating oil portion flowing at a lower speed to be pulled toward the lubricating oil portion flowing at a higher speed, thus generating a pump effect. Due to the pump effect, lubricating oil is sucked into the bearing, flows through the bearing, and is discharged from the bearing through the other axial side of the first split retainer member 41 as shown by arrows in Fig. 1.

However, the flange 60 at the other axial side of the first split retainer member 41 interferes with lubricating oil leaving the bearing, thus preventing leakage of excessive amount of lubricating oil, which in turn prevents shortening of the life of the bearing due to shortage of lubricating oil in the bearing.

With the deep groove ball bearing of the embodiment, a pair of the pocket claws 44 and a pair of the pocket claws 49 are provided, respectively, at the open end of each cutout 45 of the first split retainer member 41 and at the open end of the corresponding cutout 50 of the second split retainer member 42, so as to embrace the ball 30 received in the two cutouts 45 and 50 such that the pair of the pocket claws 44 and the pair of the pocket claws 49 extend in opposite directions to each other when they are combined. With the claws 44 combined with the claws 49, the engaging claws 46 and the 51 are engaged in the respective engaging recesses 47 and 52, thereby axially inseparably coupling together the first split retainer member 41 and the second split retainer member 42. This positively prevents separation of the retainer 40 even if the some balls 30 are moved faster or slower than the others under a large moment load.

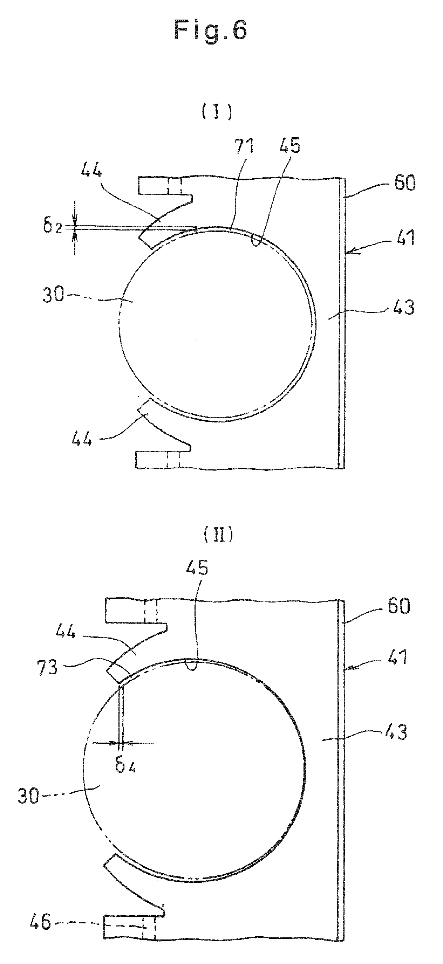

As shown in Fig. 5 and 6(I), the sizes δ₁ of the circumferential gaps 70 defined between the engaging claws 46, 51 and the corresponding engaging recesses 47, 52 are preferably larger than the sizes δ₂ of the circumferential pocket gaps 71 defined between the balls 30 and the corresponding cutouts 45, 50. With this arrangement, even if some balls 30 are moved faster or slower than the others under a large moment load, and as a result, the first split retainer member 41 and the second split retainer member 42 are rotated relative to each other, none of the engaging claws 46 and 51 will abut one of the circumferentially opposed side walls of the corresponding engaging recess 47, 52. This effectively prevents damage to the engaging claws 46 and 51.

As shown in Figs. 4 and 6(II), the sizes δ₃ of the axial gaps 72 defined between the engaging claws 46 and 51 are preferably larger than the sizes δ₄ of the axial pocket gaps defined between the balls 30 and the corresponding cutouts 45, 50. With this arrangement, while the inner surfaces of the opposed pairs of pocket claws 44 and 49 may abut the outer peripheries of the balls 30 under an axial force that tends to move the first split retainer member 41 and the second split retainer member 42 away from each other, the engaging claws 46 and 51 are positively prevented from coming into abutment with the axial end surfaces of the engaging recesses 47, 52. This effectively prevents damage to the engaging claws 46 and 51.

In Figs. 1 and 5, the cutouts 45 and 50 are formed by cutting out the annular members 43 and 48, and each, in plan view, in the shape of a partial circle larger than a semicircle. The cutouts 45 and 50 are however not limited thereto, and may be each, in plan view, in the shape of the letter U so that each opposed pair of the cutouts 45 and 50 form a cylindrical pocket with the first split retainer member 41 and the second split retainer member 42 fitted together.

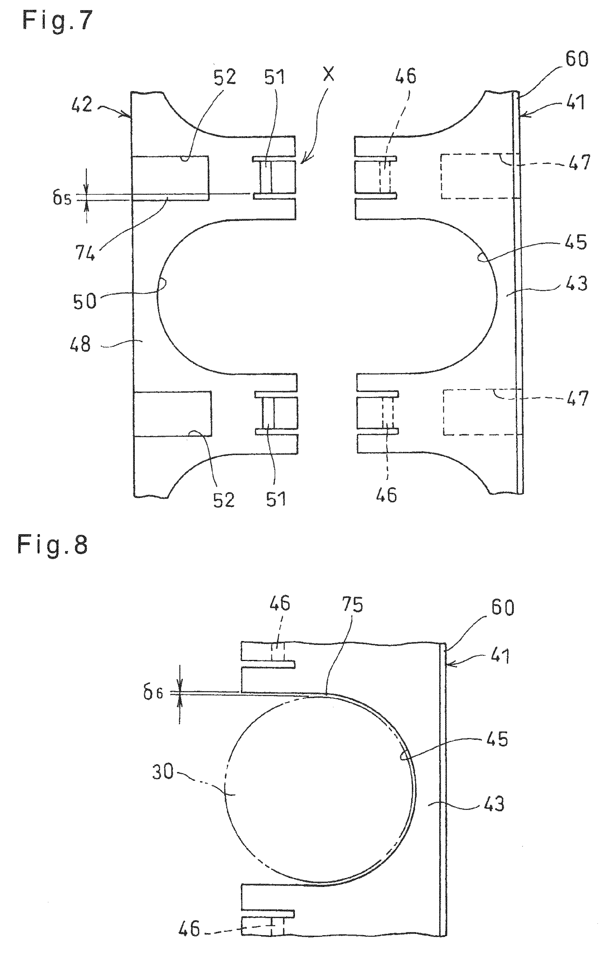

If the cutouts 45 and 50 shown in Fig. 7 are used, as shown in Figs. 7 and 8, the sizes δ₅ of the circumferential gaps 74 defined between the engaging claws 46, 51 and the corresponding engaging recesses 47, 52 are preferably larger than the sizes δ₆ of the circumferential pocket gaps 75 defined between the balls 30 and the corresponding cutouts 45, 50. With this arrangement, even if some balls 30 are moved faster or slower than the others under a large moment load, and as a result, the first split retainer member 41 and the second split retainer member 42 are rotated relative to each other, none of the engaging claws 46 and 51 will abut one of the circumferentially opposed side walls of the corresponding engaging recess 47, 52. This effectively prevents damage to the engaging claws 46 and 51.

### DESCRIPTION OF THE NUMERALS

10. Outer race
11. Raceway groove
20. Inner race
21. Raceway groove
30. Ball
40. Retainer
41. First split retainer member
42. Second split retainer member
45. Cutout
50. Cutout
60. Flange
X. Coupling means

## Claims

1. A deep groove ball bearing comprising an outer race formed with a raceway groove on a radially inner surface of the outer race, an inner race formed with a raceway groove on a radially outer surface of the inner race, balls disposed between the raceway groove of the outer race and the raceway groove of the inner race, and a retainer retaining the balls,
wherein the retainer comprises a first cylindrical split retainer member, and a second cylindrical split retainer member inserted inside of the first split retainer member,
wherein the first split retainer member includes a first axial portion having a first axial side surface formed with first cutouts circumferentially spaced apart from each other, and the second split retainer member includes a second axial portion having a second axial side surface axially opposed to the first axial side surface and formed with second cutouts circumferentially spaced apart from each other,
wherein the second axial portion of the second split retainer member is fitted in the first axial portion of the first split retainer member such that each of the first cutouts and a corresponding one of the second cutouts define a circular pocket in which is retained each of the balls,
wherein the first split retainer member includes a second axial portion opposite from the first axial side surface of the first split retainer member and protruding axially from the second axial side surface of the second split retainer member,
wherein the second split retainer member includes a first axial portion opposite from the second axial side surface of the second split retainer member and protruding axially from the first axial side surface of the first split retainer member, and
wherein the deep groove ball bearing further comprises a coupling means axially inseparably coupling together the first and second split retainer members,
**characterized in that** a flange is provided at a second axial side of the first split retainer member opposite from the first axial side surface of the first split retainer member.

2. The deep groove ball bearing of claim 1, wherein each of the first split retainer member and the second split retainer member is formed of a synthetic resin.

3. The deep groove ball bearing of claim 2, wherein the synthetic resin comprises one of polyamide 46, polyamide 66, polyamide 9T, poly(ether ether ketone) resin, and polyphenyl sulfide resin.
